# EUROPEAN PATENT APPLICATION

(11) **EP 1 589 701 A2**
(43) Date of publication of application: **26.10.2005**
(21) Application number: 05252171.3
(22) Date of filing: 07.04.2005
(51) Int. Cl.: H04L 12/28

(54) **System and method for relaying data in coordinator-based wireless network**

(30) Priority: 21.04.2004 KR 2004027461; 25.05.2004 KR 2004037486
(71) Applicant: SAMSUNG ELECTRONICS CO., LTD., Suwon-si, Gyeonggi-do (KR)
(72) Inventor: Sung, Hyun-ah, Seoul (KR); Bae, Dae-gyu, Yeongton-gu Suwon-si Gyeonggi-do (KR); Hong, Jin-woo, Yeongtong-gu Suwon-si Gyeonggi-do (KR)
(74) Representative: Brandon, Paul Laurence

(57) **Abstract**

An apparatus (850) for relaying data in a coordinator-based wireless network. The data relaying apparatus (850) includes a transmitting/receiving unit (860) for receiving a packet for requesting an allocation of a channel time for data transmission, and a control unit (870) for extracting relay information that indicates whether to relay data, from the packet and allocating the channel time in accordance with the relay information.

## Description

The present invention relates to apparatus and method for transmitting or relaying data.

With the development of communication and network technologies, network environments are recently being changed from wire network environments that use wire media such as coaxial cables or optical cables to wireless network environments that use wireless signals of diverse frequency bands. Accordingly, computing devices (hereinafter referred to as 'wireless network devices'), which are mobile, include wireless network interface modules and perform specified functions by processing diverse information, have been developed. Wireless network technologies which enable such wireless network devices to perform efficient communications have also been proposed.

The wireless network may be briefly classified into two types.

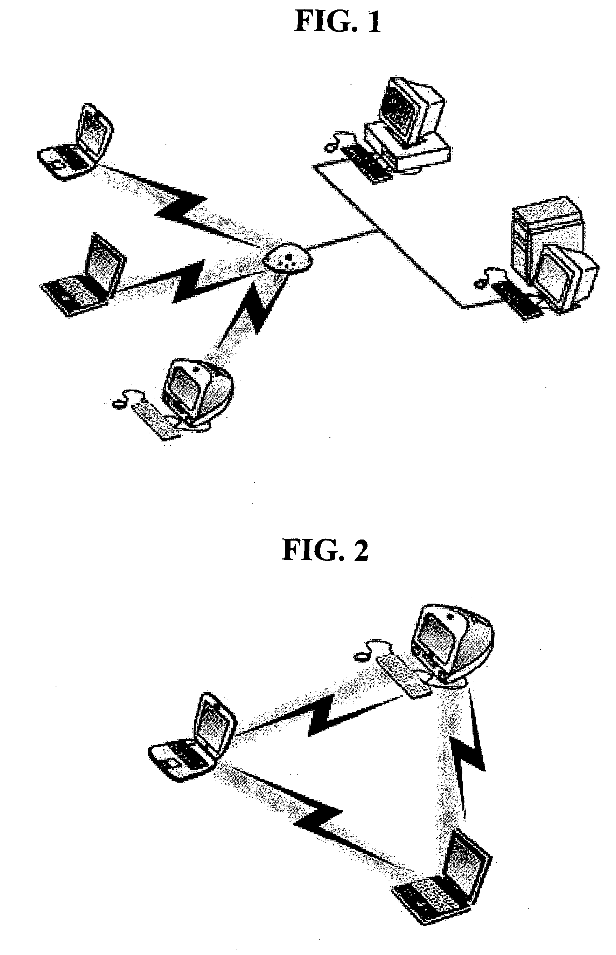

One refers to a wireless network that includes an access point as shown in FIG. 1, and is called a 'wireless network of an infrastructure mode'.

The other refers to a wireless network that does not include an access point as shown in FIG. 2, and is called a 'wireless network of an ad-hoc mode'.

In the wireless network of an infrastructure mode, the access point serves to relay data transmission in order to connect a wireless network to a wired network or to perform communications among wireless network devices that belong to the wireless network. Accordingly, all data should pass through the access point.

In the wireless network of an ad-hoc mode, wireless network devices which belong to a single wireless network directly perform data transmission/reception among them without passing the access point.

This type of network may be further classified into two types.

One type of network is a wireless network in which a certain wireless network device, selected among wireless network devices that belong to a single wireless network, serves as a coordinator that allocates a data-transmissible time (hereinafter referred to as a 'channel time') to other wireless network devices, and other wireless network devices transmit data only at the channel time.

The other type of network is a wireless network in which no wireless network device serving as a coordinator exists, but all network devices can transmit data whenever they want.

The network type in which a wireless network device that serves as a coordinator, exists, is called a 'coordinator-based wireless network, and in this case, a single independent wireless network is formed around the coordinator. If plural coordinator-based wireless networks exist in a specified space, the respective coordinator-based wireless networks have their own identification information to discriminate among them.

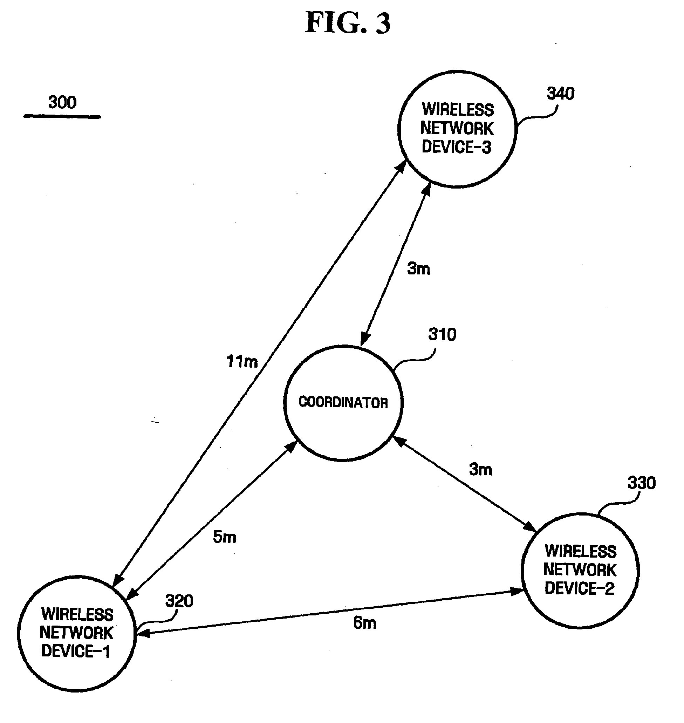

FIG. 3 is a view illustrating an example of a coordinator-based wireless network.

In a coordinator-based wireless network, a coordinator allocates a channel time in response to requests of wireless network devices that intend to transmit data so that the wireless network devices that belong to the same wireless network can perform data transmission/reception among them. Also, the coordinator broadcasts information about the wireless network that the coordinator itself belongs to or information about the wireless network devices that belong to the wireless network. In this case, the wireless network devices directly perform data transmission/reception during the allocated channel time, without passing through the coordinator. Accordingly, in order to perform the data transmission/reception among the wireless network devices, the wireless network devices that transmit data, the wireless network devices that receive data, and the coordinator should all exist within an effective propagation distance.

For example, it is assumed that in the coordinator-based wireless network 300 as shown in FIG. 3, a propagation range of coverage among wireless network devices 320, 330 and 340 and a coordinator 310 is 10m in diameter.

In this case, if the wireless network device-1 320 intends to transmit data to the wireless network device-2 330, the wireless network device-1 320 should be first allocated with a channel time for transmitting information to the wireless network device-2 330, from the coordinator 310. Then, the wireless network device-1 320 transmits data to the wireless network device-2 330 during the allocated channel time. The reason why such data transmission is possible is that the coordinator 310, the wireless network device-1 320 and the wireless network device-2 330 are within the effective propagation distance.

However, if the wireless network device-1 320 intends to transmit data to the wireless network device-3 340, there is a problem.

In this case, the wireless network device-1 320 can receive the information about the wireless network device-3 340 from the coordinator and be allocated with the channel time. However, since the distance between the wireless network device-1 320 and the wireless network device-3 340 exceeds the effective propagation distance of 10m, the wireless network device-1 320 cannot transmit data to the wireless network device-3 340.

That is, due to the limitations in wireless propagation distance, the wireless network devices that belong to the coordinator-based wireless network cannot perform communications between themselves even if they can recognize each other.

Consequently, it is necessary to provide a mechanism which enables the wireless network devices that belong to a single coordinator-based wireless network to communicate with one another even if the wireless propagation distance is limited.

Accordingly, preferred embodiments of the present invention have been made to aim to address the above-mentioned problems occurring in the prior art, and an aim of preferred embodiments of the present invention is to provide a method which enables a coordinator to relay a data transmission in a coordinator-based wireless network so that data transmission/reception can be performed among all wireless network devices that belong to the coordinator-based wireless network.

According to the present invention, there is provided an apparatus for transmitting data in a coordinator-based wireless network, according to the present invention, comprising a control unit for generating a packet for requesting an allocation of a channel time for data transmission; and a transmitting/receiving unit for transmitting the generated packet to a coordinator; wherein the packet includes relay information for making the coordinator relay the data.

In another aspect of the present invention, there is provided an apparatus for relaying data in a coordinator-based wireless network, according to the present invention, comprising a transmitting/receiving unit for receiving a packet for requesting an allocation of a channel time for data transmission; and a control unit for extracting relay information that indicates whether to relay data from the packet, and allocating the channel time in accordance with the relay information.

In still another aspect of the present invention, there is provided an apparatus for relaying data in a coordinator-based wireless network, according to the present invention, comprising a transmitting/receiving unit for receiving a data packet for a channel time allocated for data transmission; and a control unit for extracting relay information that indicates whether to relay data from the packet, and transmitting the received packet to another network device through the transmitting/receiving unit for the channel time in accordance with the relay information.

In still another aspect of the present invention, there is provided an apparatus for relaying data in a coordinator-based wireless network, according to the present invention, comprising a transmitting/receiving unit for receiving a data packet for a first channel time allocated for data transmission; a storage unit for storing data; and a control unit for extracting relay information that indicates whether to relay the data from the packet, and transmitting the packet that includes the data stored in the storage unit to another network device through the transmitting/receiving unit for a second channel time in accordance with the relay information.

In still another aspect of the present invention, there is provided a method for relaying data in a coordinator-based wireless network, according to the present invention, comprising the steps of a data transmitting device transmitting a data packet, which includes relay information that indicates whether to relay data to a data relaying device for a channel time allocated for data transmission; the data relaying device receiving the data packet; the data relaying device extracting the relay information from the received packet; and the data relaying device transmitting the received packet to another network device for the channel time in accordance with the relay information.

In still another aspect of the present invention, there is provided a method for relaying data in a coordinator-based wireless network, according to the present invention, comprising the steps of a data transmitting device transmitting a data packet, which includes relay information that indicates whether to relay data to a data relaying device for a first channel time allocated for data transmission; the data relaying device receiving the data packet; the data relaying device storing the data; the data relaying device extracting the relay information from the received packet; and the data relaying device transmitting the packet that includes the stored data to another network device for a second channel time in accordance with the relay information.

In still another aspect of the present invention, there is provided a method for relaying data in a coordinator-based wireless network, according to the present invention, comprising the steps of a data transmitting device transmitting data packet to a data receiving device; and the data transmitting device transmitting the data packet to the coordinator when not receiving a response packet corresponding to the data packet from the data receiving device, wherein the data packet transmitted to the coordinator comprises further information to ask the coordinator to transmit the data packet to the data receiving device.

The present invention will be more apparent from the following detailed description, by way of example only, taken in conjunction with the accompanying drawings, in which:

FIG. 1 is a view illustrating an example of a wireless network system of an infrastructure mode;

FIG. 2 is a view illustrating an example of a wireless network system of an ad-hoc mode;

FIG. 3 is a view illustrating an example of a coordinator-based wireless network;

FIG. 4 is a view illustrating an example of a piconet according to an exemplary embodiment of the present invention:

FIG. 5 is a view illustrating a frame structure of a channel time request command according to an exemplary embodiment of the present invention;

FIG. 6 is a view illustrating the structure of a header of a MAC frame according to an exemplary embodiment of the present invention;

FIG. 7 is a view illustrating the structure of a message for generating a channel time request command according to an exemplary embodiment of the present invention;

FIG. 8 is a block diagram illustrating the construction of devices and a PNC according to an exemplary embodiment of the present invention;

FIG. 9 is a flowchart illustrating a data communication method through one channel time according to an exemplary embodiment of the present invention;

FIG. 10 is a flowchart illustrating a data communication method through one channel time according to another exemplary embodiment of the present invention;

FIG. 11 is a flowchart illustrating a data communication method through two channel times according to an exemplary embodiment of the present invention; and

FIG. 12 is a state diagram explaining a data communication process according to still another exemplary embodiment of the present invention.

Hereinafter, exemplary embodiments of the present invention will be described with reference to the accompanying drawings. The matters defined in the description, such as detailed construction and elements, are nothing but specific details provided to assist in a comprehensive understanding of the invention. Thus, it will be apparent that the present invention can be carried out without such limitations. In the following description of the present invention, the same drawing reference numerals are used for the same elements among/across various figures.

The present invention is described hereinafter with reference to flowchart illustrations of methods according to exemplary embodiments of the invention. It will be understood that each block of the flowchart illustrations and combinations of blocks in the flowchart illustrations can be implemented by computer program instructions. These computer program instructions can be provided to a processor of a general purpose computer, special purpose computer or other programmable data processing apparatuses to produce a machine, such that the instructions, which execute via the processor of the computer or other programmable data processing apparatuses, create means for implementing the functions specified in the flowchart block or blocks.

These computer program instructions may also be stored in a computer usable or computer-readable memory that can direct a computer or other programmable data processing apparatuses to function in a particular manner such that the instructions stored in the computer usable or computer-readable memory produce an article of manufacture including instruction means that implement the function specified in the flowchart block or blocks.

The computer program instructions may also be downloaded into a computer or other programmable data processing apparatuses, causing a series of operational steps to be performed on the computer or other programmable apparatuses to produce a computer implemented process such that the instructions that execute on the computer or other programmable apparatuses provide steps for implementing the functions specified in the flowchart block or blocks.

Each block of the flowchart illustrations may represent a module, segment or portion of code, which comprises one or more executable instructions for implementing the specified logical function(s). It should also be noted that in some alternative implementations the functions noted in the blocks may occur out of order. For example, two blocks shown in succession may in fact be executed almost concurrently or the blocks may sometimes be executed in reverse order, depending upon the functionality involved.

Meanwhile, IEEE (Institute of Electrical and Electronics Engineers) 802.15.3 has proposed the standard for a PHY layer corresponding to a physical layer and a MAC (Medium Access Control) layer corresponding to a data-link layer among 7 layers of OSI (Open System interconnection) of a network model announced by ISO.

In order to more easily understand embodiments of the present invention, WPAN (Wireless Personal Area Network) according to the IEEE 802.15.3 standard will now be explained as an example of a coordinator-based wireless network. IEEE 802.15.3 standard (which will be explained in an exemplary embodiment of the present invention) is based on 'Draft P802.15.3/D17' announced in February 2003.

In WPAN, a wireless network device is referred to as a 'device', and a single network formed by at least one device is called a 'piconet'. Hereinafter, terms defined in WPAN will also be used in explaining the described embodiment of the present invention. Meanwhile, the piconet can be discriminated from other piconets by its piconet identification information.

A device that serves as a coordinator may also be selected among devices that belong to a piconet. In WPAN, the device that serves as a coordinator is called a 'piconet coordinator' (hereinafter referred to as 'PNC').

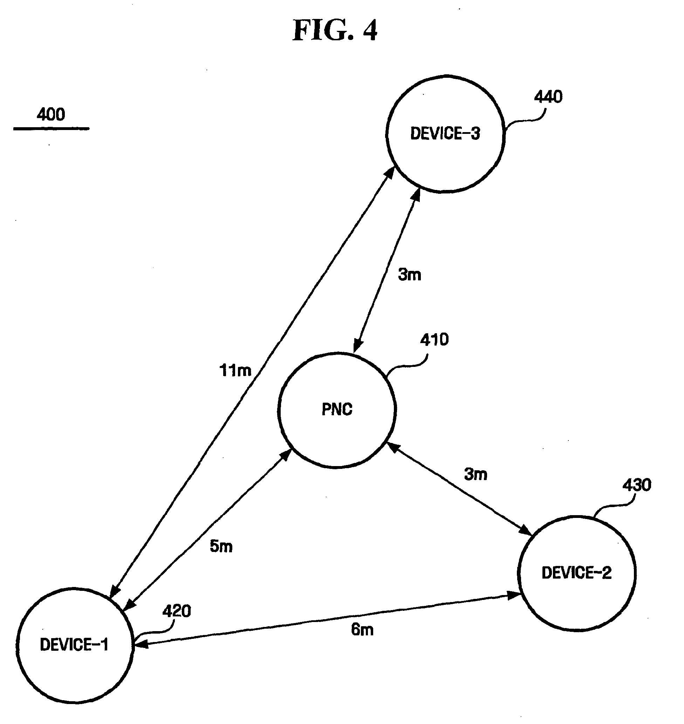

FIG. 4 is a view illustrating a piconet according to an exemplary embodiment of the present invention. It is assumed that a piconet 400 includes three devices 420, 430 and 440 around a PNC 410 (the propagation distances of the PNC 410 and the respective devices 420, 430 and 440 are set to 10m).

IN FIG. 4, a device-1 420 requests information about devices that belong to the piconet 400 from the PNC 410 and receives a response packet from the PNC 410. This process can be performed by a 'PNC information request' command and a 'PNC information' command of the IEEE 802.15.3 standard.

The device-1 420 extracts information about the device (hereinafter referred to as 'target device') to which the device-1 420 intends to transmit data, from the response packet. The device-1 420 then transmits a packet for requesting a response to the target device (hereinafter referred to as a 'propagation range prove request packet'). If the device-1 420 receives the response packet from the target device, it can transmit data directly to the target device. However, if the device-1 420 cannot receive the response packet from the target device, this means that the target device is located outside the propagation range from the device-1 420. Thus the device-1 420 cannot transmit the data directly to the target device. However, the process of transmitting the data directly to the target device can be performed by a 'probe request' command and a 'PNC response' command of the IEEE 802.15.3 standard.

For example, if the target device is a device-2 430, as shown in FIG. 4, the device-1 420 can transmit the data directly to the device-2 430. However, if the target device is a device-3 440, the device-1 420 cannot transmit the data directly to the device-3 440 but can transmit data to the device-3 440 via the PNC 410.

In this case, either a channel time for transmitting data to the target device should be allocated to the device-1 420, or device-1 420 should inform the PNC 410 of information that indicates whether the data should pass through the PNC 410 (hereinafter referred to as 'relay information') as it transmits the data for the allocated channel time. The PNC 410 determines whether to serve as a coordinator for data transmission according to the relay information.

If the target device is the device-3 440, the PNC 410 should serve as a coordinator, and thus the data transmitted from the device-1 420 is transferred to the device-3 440 via the PNC 410.

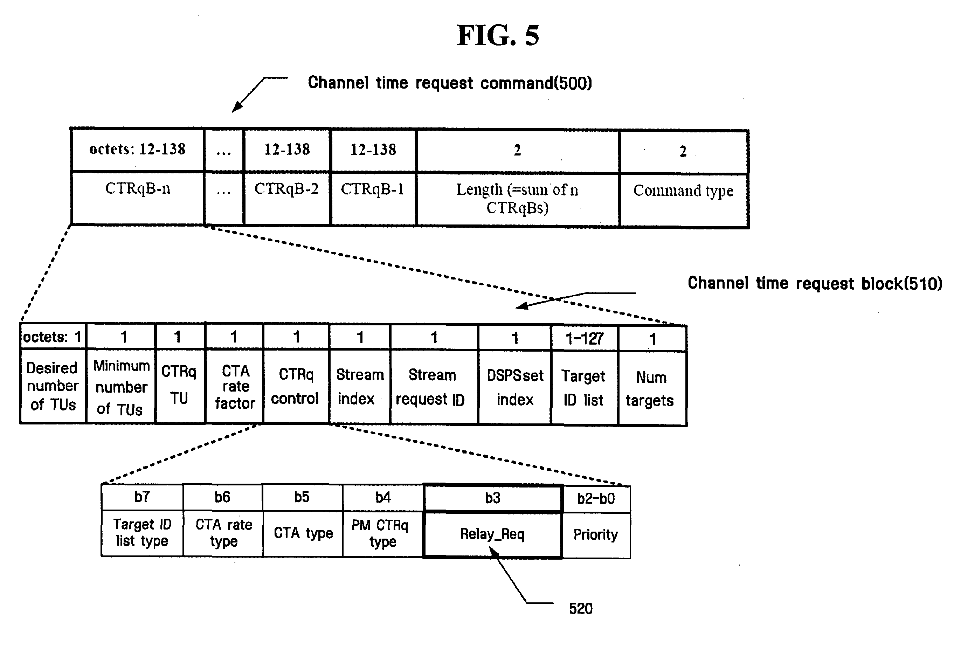

FIGs. 5 to 7 are views illustrating frame structures that include the relay information according to an exemplary embodiment of the present invention. Using these frame structures, the mechanism explained with reference to FIG. 4 can be performed.

Hereinafter, in order to more easily explain the present invention, the frame structure according to the IEEE 802.15.3 standard will be explained.

The relay information may be included in a command that the device-1 420 requests a channel time allocation to the PNC 410 or in a message for generating the command in the device-1 420. In this case, in using the IEEE 802.15.3 standard, the command follows a 'channel time request command' format and the message follows a 'MLME-CREATE-STREAM.request' format. The relay information may also be included in a header of a medium access control (MAC) frame when the device-1 420 transmits the 'channel time request command' to the PNC 410.

FIG. 5 is a view illustrating the frame structure of a channel time request command according to an exemplary embodiment of the present invention. The channel time request command 500, as shown in FIG. 5, has several channel time request blocks 510. In a 'CTRq control' information field of the channel time request block 510, a 'Reserved' area of one bit exists. By defining this area as a 'Relay_Req' area, the PNC 410 can know whether it serves to relay a data transmission.

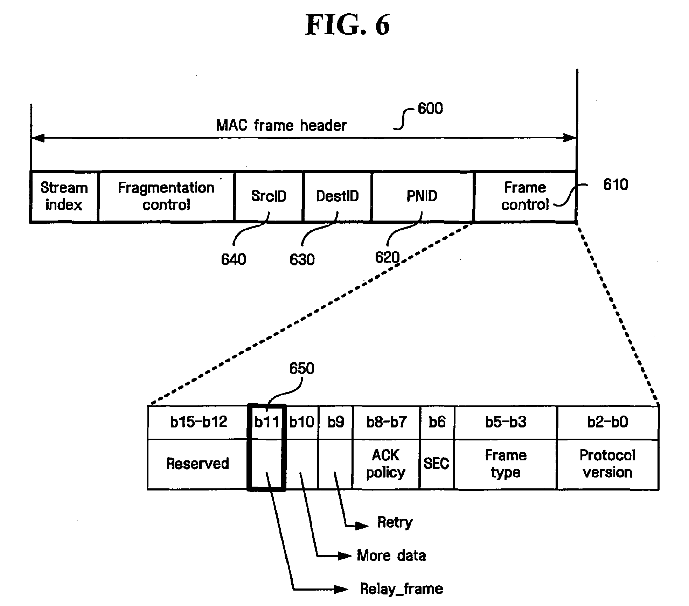

FIG. 6 is a view illustrating the structure of a header of a MAC frame according to an exemplary embodiment of the present invention.

The header 600 of the MAC frame includes a 'Frame control' information field 610 that includes control information of the MAC frame, a "PNID (Piconet Identifier) information field 620 that indicates an identifier of a piconet, a 'SrcID' information field 640 that identifies a device which transmits the MAC frame, and a 'DestID' information field 630 that identifies a target device which receives the MAC frame. The 'Frame control' information field 610 has a size of two bytes, and the 'b11' area, which was defined as a 'Reserved' area in the conventional IEEE 802.15.3 standard, is defined as a 'Relay_frame' area 650 that indicates the relay information in the embodiment of the present invention. For example, if the 'Relay_frame' information is '1', it indicates that the MAC frame that includes the header should be relayed by the PNC, while if the 'Relay_frame' information is '0', it indicates that the MAC frame that includes the header should not be relayed by the PNC. Accordingly, the PNC determines whether to relay the received frame in accordance with the 'Relay_frame' information.

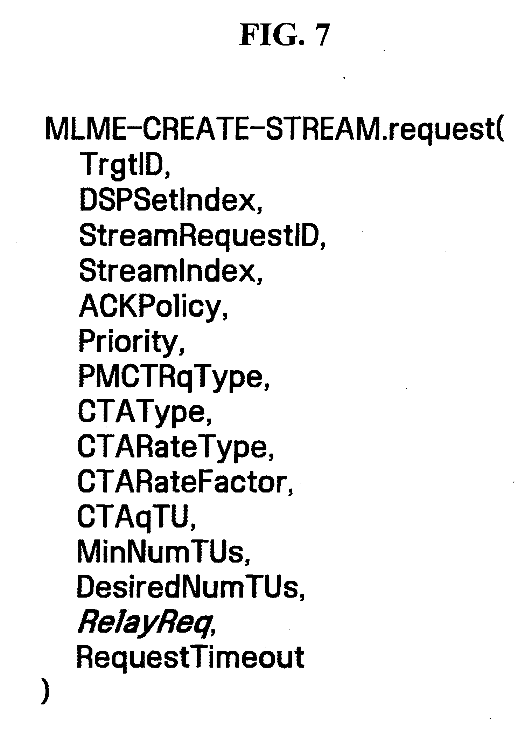

FIG. 7 is a view illustrating the structure of a message for generating a channel time request command according to an exemplary embodiment of the present invention.

In order to transmit the command to request the channel time allocation to the PNC 410, the device-1 420 calls a message for generating the command from the device-1 420 itself. Information included in the called message is included in the command for requesting the channel time allocation, and then transmitted to the PNC 410. Accordingly, the relay information should be included in the message format.

In using the IEEE 802.15.3 standard, the message format corresponds to the 'MLME-CREATE-STREAM.request', and the message structure to which the relay information is added is shown in FIG. 7. Here, the relay information corresponds to a 'RelayReq' parameter. Preferably, the data type of the 'RelayReq' parameter is Boolean. For example, if the value of the 'RelayReq' parameter is 'TRUE', it indicates that the PNC is requested to relay the data, while if the value of the 'RelayReq' parameter is 'FALSE', it indicates that the PNC is not requested to relay the data. In the above-described method, the structure of the 'MLME-MODIFY-STREAM.request' message defined in the IEEE 802.15.3 standard can be modified.

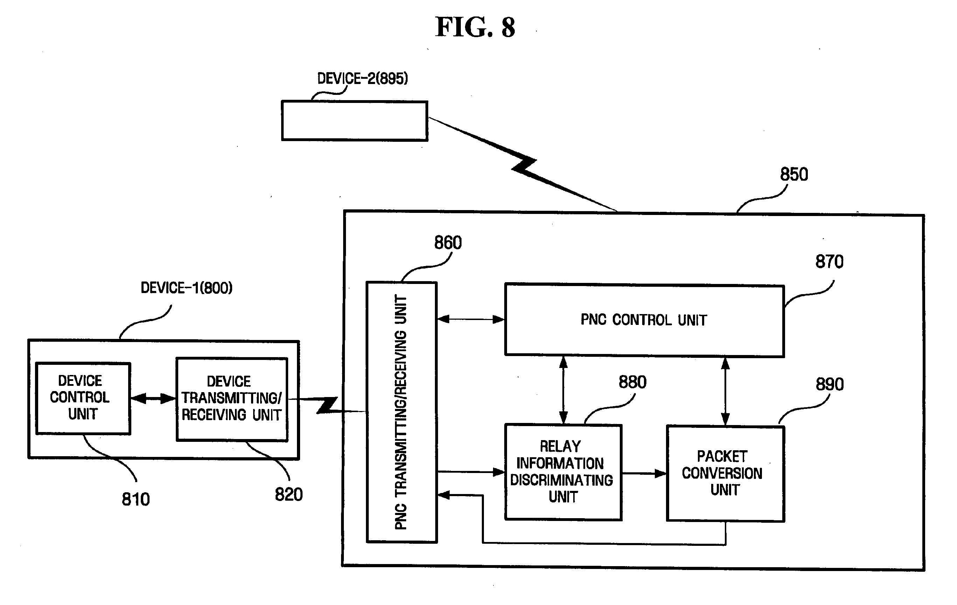

FIG. 8 is a block diagram illustrating the construction of devices and PNC according to an exemplary embodiment of the present invention.

PNC 850 includes a PNC transmitting/receiving unit 860 for transmitting/receiving a wireless packet to/from a device-1 800 and a device-2 895 through a piconet, a relay information discriminating unit 880 for receiving the wireless packet from the PNC transmitting/receiving unit 860 and discriminating whether to relay the data in accordance with the relay information included in the wireless packet, a packet conversion unit 890 for reconstructing the received wireless packet by partly modifying the MAC frame information if the PNC 850 should relay the data and a PNC control unit 870 for managing a process performed among the PNC transmitting/receiving unit 860, relay information discriminating unit 880 and packet conversion unit 890.

The device-1 800 includes a device control unit 810 for generating a wireless packet that includes a header of a MAC frame and a transmitting/receiving unit 820 for transmitting the generated wireless packet. The device-2 895 has the same construction as the device-1 800.

Meanwhile, since the PNC is selected among at least one device, it may be considered as a kind of device. Accordingly, although the PNC 850 and the device-1 800 have the same construction, they are illustrated to have functions different from each other in FIG. 8. That is, the PNC control unit 870, relay information discriminating unit 880 and packet conversion unit 890 may be implemented into a single IC chip and they correspond to the device control unit 810 of the device-1 800.

Hereinafter, the operation of the PNC 850 and the device-1 800 will be explained in detail.

It is assumed that the device-1 800 has found the device-2 895 which belongs to the same piconet through the mechanism of FIG. 4, but to which the device-1 cannot transmit data directly.

Since the device-1 800 should be allocated with a channel time from the PNC 850 in order to transmit the data to the device-2 895, the device control unit 810 internally calls the 'MLME-CREATE-STREAM.request' as illustrated in FIG. 7. At this time, since the PNC 850 should relay the data, the device-1 sets the 'RelayReq' parameter for requesting the relay of the PNC 850. Then, the device-1 800 converts the called 'MLME-CREATE-STREAM.request' message into a channel time request command as illustrated in FIG. 5, and transmits the channel time request command to the PNC 850 through the device transmitting/receiving unit 820. At this time, the 'Relay_Req' information 520 as illustrated in FIG. 5 and the 'Relay_frame' information 650 as illustrated in FIG. 6 are set.

The PNC transmitting/receiving unit 860 of the PNC 850 receives the channel time request command transmitted from the device-1 800, and the relay information discriminating unit 880 extracts the 'Relay_Req' information 520 and the 'Relay_frame' information 650, so that the PNC 850 knows that it should serve as a coordinator. The PNC control unit 870 allocates the channel time for which the device-1 800 can transmit the data.

The device-1 800 transmits a data packet to the PNC 850 for the allocated channel time. At this time, the device-1 sets the 'Relay_frame' information 650 as illustrated in FIG. 6, sets the 'SrcID' information field 640 of the MAC frame header 600 as its own device identification information, and sets the 'DestID' information field 630 as the device identification information of the PNC 850.

The PNC transmitting/receiving unit 860 of the PNC 850 receives the data packet transmitted from the device-1 800, and the relay information discriminating unit 880 extracts the 'Relay_frame' information 650, so that the PNC 850 knows that it should serve as a coordinator. In order to transmit the received data packet to the device-2 895, the PNC 850 sets the 'SrcID' information field 640 of the MAC frame header 600 as illustrated in FIG. 6 as its own device identification information and sets the 'DestID' information field 630 as device identification information of the device-2 895. This operation may be performed through the packet conversion unit 890. Also, the data received from the device-1 800 while the conversion unit 890 operates, may be stored in a separate storage module (not illustrated). Specifically, the PNC 850 may transmit the received data packet to the device-2 895 as it is, and if it is required to change the information of the MAC frame header 600, the packet conversion unit 890 may set necessary information, and transmit the changed packet to the device-2 895. It is preferable to allocate one channel time, which passes through the PNC 850, between the device-1 800 and the device-2 895 in the former case, while it is preferable to allocate two channel times between the device-1 800 and the PNC 850 and between the PNC 850 and the device-2 895 in the latter case.

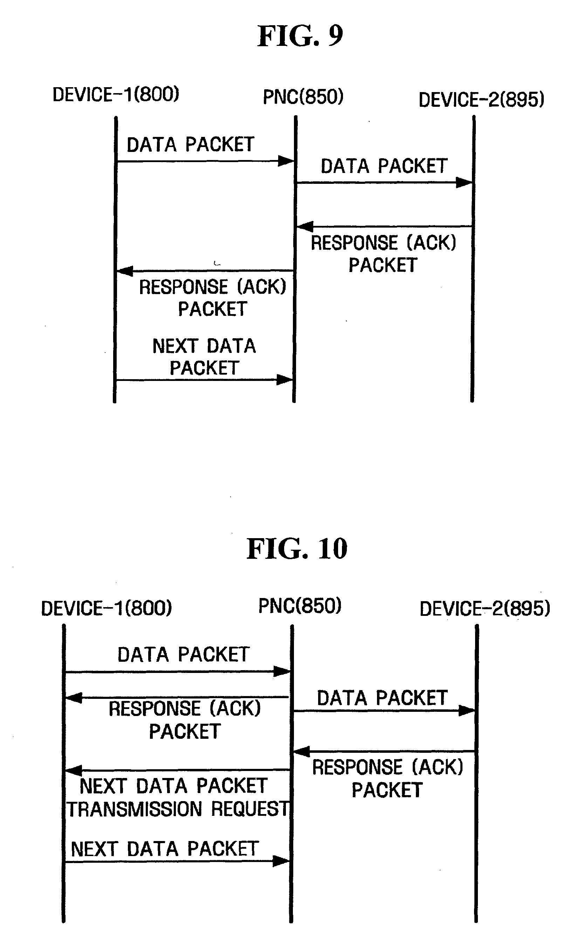

FIG. 9 is a flowchart illustrating a data communication method through one channel time according to an exemplary embodiment of the present invention.

The device-1 800 sets the 'SrcID' information field 640 of the MAC frame header 600 as illustrated in FIG. 6 as its own device identification information and sets the 'DestID' information field 630 as device identification information of the device-2 895.

Then, the device-1 800 transmits the data packet to the PNC 850. The PNC 850 transmits the data packet to the device-2 895, and then receives a response (ACK) packet from the device-2 895. The PNC 850, which has received the response (ACK) packet from the device-2 895, transmits the response (ACK) packet to the device-1 800.

The device-1 800, which has received the response (ACK) packet from the PNC 850, transmits the next data packet to the PNC 850.

In following the mechanism as described above, it is necessary to adjust time information for a packet retransmission in consideration of the time required for the device-1 800 to receive the response (ACK) packet after the transmission of the data packet.

FIG. 10 is a flowchart illustrating a data communication method through one channel time according to another exemplary embodiment of the present invention.

In the same manner as in FIG. 9, the device-1 800 sets the 'SrcID' information field 640 of the MAC frame header 600 as illustrated in FIG. 6 as its own device identification information, and sets the 'DestID' information field 630 as the device identification information of the device-2 895.

Then, the device-1 800 transmits the data packet to the PNC 850. The PNC 850 transmits a response (ACK) packet to the device-1 800, and transmits the data packet to the device-2 895.

The device-2 895, which has received the data packet from the PNC 850, transmits a response (ACK) packet to the PNC 850. Then, the PNC 850 transmits a packet for requesting the transmission of the next data packet (hereinafter referred to as a 'Send_next_frame packet') to the device-1 800. In this case, using the 'Reserved' area or 'Frame type' area in the 'Frame control' information field 610 of the MAC frame header 600 as illustrated in FIG. 6, the 'Send_next_frame packet' can be defined. If the device-1 800 receives the 'Send_next_frame packet', it transmits the next data packet to the PNC 850.

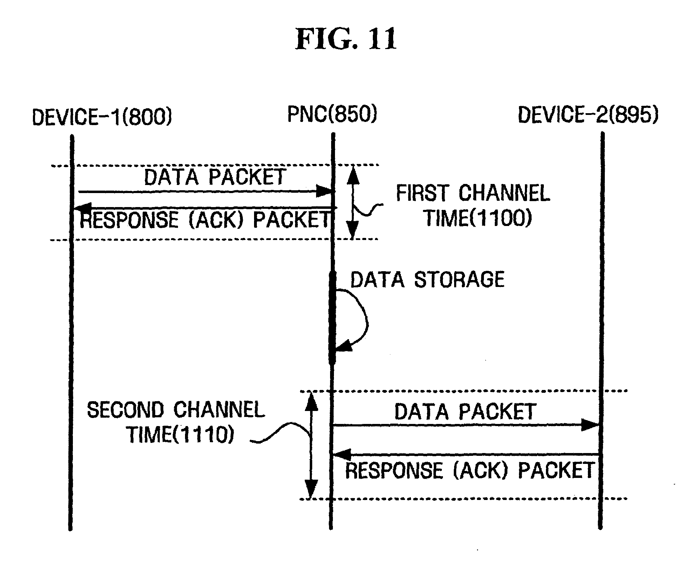

FIG. 11 is a flowchart illustrating a data communication method through two channel times according to an embodiment of the present invention.

During the first channel time 1100 allocated between the device-1 800 and the PNC 850, the PNC 850 receives the data packet from the device-1 800. At this time, the 'SrcID' information field 640 of the MAC frame header 600 as illustrated in FIG. 6 is set as the device identification information of the device-1 800, and the 'DestID' information field 630 is set as the device identification information of the PNC 850.

The PNC 850, which has received the data packet from the device-1 800, transmits a response (ACK) packet to the device-1 800.

Then, the PNC 850 stores the data received from the device-1 800 in a certain storage module provided inside the PNC 850, and if the second channel time 1110 arrives, it transmits the data packet that includes the stored data to the device-2 895. At this time, the 'SrcID' information field 640 of the MAC frame header 600 as illustrated in FIG. 6 is set as the device identification information of the PNC 850, and the 'DestID' information field 630 is set as the device identification information of the device-2 895. The device-2 895, which received the data packet from the PNC 850 during the second channel time 1110, transmits a response (ACK) packet to the PNC 850.

In the same manner as in FIG. 9, the device-1 800 sets the 'SrcID' information field 640 of the MAC frame header 600 as illustrated in FIG. 6 as its own device identification information and sets the 'DestID' information field 630 as the device identification information of the device-2 895.

Meanwhile, when the device-1 420 intends to transmit the data to the device-3 440 as shown in FIG. 4, the device-1 420 transmits a propagation range prove request packet to the device-3 440 in order to know whether the device-3 440 exists within the propagation range of coverage in which the device-3 440 can communicate with the device-1 420. If the device-1 420 cannot receive the response packet from the device-3 440, it judges that the device-3 440 is located outside the propagation range from the device-1 420. Then, the device-1 420 transfers the data, which should be transmitted to the device-3 440, to the PNC 410, so that the PNC 410 transmits the data to the device-3 440.

However, the device-3 440 may move and enter into the propagation range before or while the device-1 420 transfers the data to the PNC 410. In this case, it is not required for the device-1 420 to transmit the data to the device-3 440 via the PNC 410 and thus the device-1 420 transmits the data directly to the device-3 440. For this, the device-1 420 requires a method for sensing such a situation.

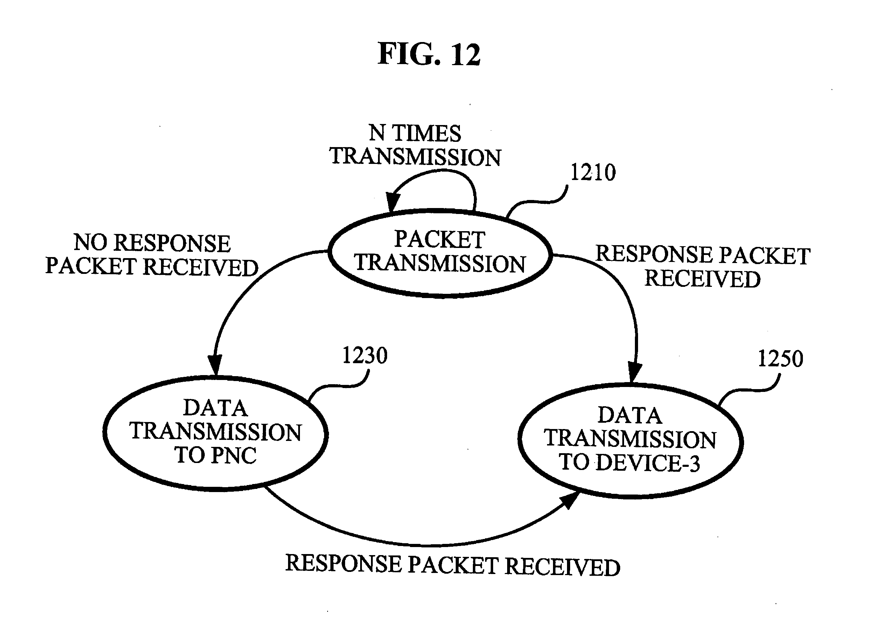

Specifically, by transmitting the propagation range prove request packet periodically or for a predetermined number of times, rather than only once, the device-1 420 can receive the response packet from the device-3 440 that has entered into the propagation range. Accordingly, the device-1 420 can transmit the data directly to the device-3 440. This process is illustrated in FIG. 12.

For example, if the device-1 420 receives the response packet while it transmits the propagation range prove request packet N times (step 1210), it transmits the data to the device-3 440 (step 1250). However, if the device-1 420 cannot receive the response packet to the propagation range prove request packet, it transmits the data to the PNC 410 (step 1230). If the device-1 420 receives the response packet while it transmits the data to the PNC 410, it transmits the data directly to the device-3 440 (step 1250).

As described above, preferred embodiments of the present invention enable a coordinator to relay a data transmission in a coordinator-based wireless network that has a limited propagation range and thus data transmission/reception can be performed among all wireless network devices that belong to the coordinator-based wireless network.

Although exemplary embodiments of the present invention have been described for illustrative purposes, those skilled in the art will appreciate that various modifications, additions and substitutions are possible without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (800) for transmitting data in a coordinator-based wireless network, comprising:
a control unit (810) for generating a packet for requesting an allocation of a channel time for data transmission; and
a transmitting/receiving unit (820) for transmitting the generated packet to a coordinator (850);
wherein the packet includes relay information for making the coordinator relay the data.

2. The apparatus (800) as claimed in claim 1, wherein the relay information includes information of a Boolean type.

3. The apparatus (800) as claimed in claim 1 or claim 2, wherein the generating of the packet relates to generating a message for requesting the channel time.

4. The apparatus (800) as claimed in claim 3, wherein the message includes the relay information.

5. The apparatus (800) as claimed in claim 4, wherein the relay information includes information of a Boolean type.

6. The apparatus (800) as claimed in any preceding claim, wherein the packet is a wireless packet that follows IEEE 802.15.3 standard.

7. An apparatus (850) for relaying data in a coordinator-based wireless network, comprising:
a transmitting/receiving unit (860) for receiving a packet for requesting an allocation of a channel time for data transmission; and
a control unit (870) for extracting relay information that indicates whether to relay data from the packet, and allocating the channel time in accordance with the relay information.

8. The apparatus (850) as claimed in claim 7, wherein the relay information includes information of a Boolean type.

9. The apparatus (850) as claimed in claim 7 or claim 8, wherein the data packet is a wireless packet that follows IEEE 802.15.3 standard.

10. An apparatus (850) for relaying data in a coordinator-based wireless network, comprising:
a transmitting/receiving unit (860) for receiving a data packet for a channel time allocated for data transmission; and
a control unit (870) for extracting relay information that indicates whether to relay data from the data packet, and transmitting the received packet to another network device (895) through the transmitting/receiving unit (860) for the channel time in accordance with the relay information.

11. The apparatus (850) as claimed in claim 10, wherein the relay information includes information of a Boolean type.

12. The apparatus as claimed in claim 10 or claim 11, wherein the data packet is a wireless packet that follows IEEE 802.15.3 standard.

13. An apparatus (850) for relaying data in a coordinator-based wireless network, comprising:
a transmitting/receiving unit (860) for receiving a data packet for a first channel time allocated for data transmission;
a storage unit for storing data; and
a control unit (870) for extracting relay information that indicates whether to relay the data from the data packet, and transmitting the data packet that includes the data stored in the storage unit to another network device (895) through the transmitting/receiving unit (860) for a second channel time in accordance with the relay information.

14. The apparatus as claimed in claim 13, wherein the relay information includes information of a Boolean type.

15. The apparatus as claimed in claim 13 or claim 14, wherein the data packet is a wireless packet that follows IEEE 802.15.3 standard.

16. A method for relaying data in a coordinator-based wireless network, comprising:
transmitting, at a data transmitting device, a data packet, which includes relay information that indicates whether to relay data, to a data relaying device for a channel time allocated for data transmission;
receiving, at the data relaying device, the data packet;
extracting, at the data relaying device, the relay information from the received data packet; and
the data relaying device transmitting the received data packet to another network device for the channel time in accordance with the relay information.

17. The method as claimed in claim 16, wherein the relay information includes information of a Boolean type.

18. The method as claimed in claim 16 or claim 17, wherein the data packet follows IEEE 802.15.3 standard.

19. A method for relaying data in a coordinator-based wireless network, comprising:
transmitting, at a data transmitting device, a data packet, which includes relay information that indicates whether to relay data, to a data relaying device for a first channel time allocated for data transmission;
receiving, at the data relaying device, the data packet;
storing, at the data relaying device, the data;
extracting, at the data relaying device, the relay information from the received packet; and
transmitting, at the data relaying device, the data packet that includes the stored data to another network device for a second channel time in accordance with the relay information.

20. The method as claimed in claim 19, wherein the relay information includes information of a Boolean type.

21. The method as claimed in claim 19 or claim 20, wherein the data packet follows IEEE 802.15.3 standard.

22. A method for relaying data in a coordinator-based wireless network, comprising:
transmitting, at a data transmitting device, a data packet to a data receiving device; and
transmitting, at the data transmitting device, the data packet to a coordinator when not receiving a response packet corresponding to the data packet from the data receiving device, wherein the data packet transmitted to the coordinator comprises further information to request the coordinator to transmit the data packet to the data receiving device.

23. The method as claimed in claim 22, wherein the further information comprises address information of the data receiving device and relay request information.
